# FASCICULE DE BREVET EUROPEEN

(11) **EP 2 297 438 B1**
(45) Date de publication et mention de la délivrance du brevet: **16.07.2014**
(21) Numéro de dépôt: 09745917.6
(22) Date de dépôt: 30.04.2009
(51) Int. Cl.: F02C 9/00, F02K 1/76

(54) **PROCÉDÉ ET DISPOSITIF DE MISE EN OEUVRE DES INVERSEURS DE POUSSÉE D'UN AÉRONEF**
VERFAHREN UND VORRICHTUNG ZUM EINSETZEN EINES FLUGZEUGSCHUBUMKEHRERS
METHOD AND DEVICE FOR IMPLEMENTING THE THRUST REVERSERS OF AN AIRCRAFT

(30) Priorité: 06.05.2008 FR 0802511
(43) Date de publication de la demande: 23.03.2011
(73) Titulaire: AIRBUS OPERATIONS (SAS), 31060 Toulouse (FR)
(72) Inventeur: ABRIAL, Philippe, F-31330 Merville (FR); FEUILLARD, Philippe, F-31290 Gardouch (FR)
(74) Mandataire: Gevers France
(86) Numéro de dépôt international: PCT/FR2009/000516
(87) Numéro de publication internationale: WO 2009/138598

(56) Documents cités:
- FR-A- 2 250 025
- FR-A- 2 872 223
- US-A- 3 618 880

## Description

L'invention concerne un procédé et un dispositif permettant la mise en oeuvre des inverseurs de poussée d'un aéronef, ainsi qu'un aéronef pourvu d'un tel dispositif.

On sait que les aéronefs civils équipés de turbo-réacteurs sont munis d'inverseurs de poussée permettant d'améliorer leur freinage, en réduisant notablement la distance de roulement au sol, lors d'un atterrissage ou d'une interruption de décollage. Les inverseurs de poussée sont associés aux moteurs des aéronefs et sont commandables pour pouvoir passer d'une position inactive repliée à une position active déployée et, inversement, de ladite position active déployée à ladite position inactive repliée. Après avoir adapté le régime des moteurs, le pilote peut déclencher manuellement le déploiement des inverseurs de poussée associés à ces moteurs au moyen d'organes de commande du type levier.

Cependant, les inverseurs de poussée présentent un risque de déploiement intempestif en vol, par exemple par une action involontaire du pilote sur un des organes de commande. De plus, un mauvais positionnement de la manette des gaz d'un des moteurs, lorsque les inverseurs de poussée de l'ensemble des moteurs sont déployés, ou un contrôle erroné de la poussée des moteurs, lorsque l'inverseur de poussée d'un des moteurs est défaillant, peut engendrer une dissymétrie de la poussée globale des moteurs et entraîner des difficultés pour contrôler l'aéronef au sol. En outre, un délai de décision important entre le toucher des roues de l'aéronef sur le sol et le déploiement des inverseurs de poussée par le pilote réduit la contribution des inverseurs de poussée au freinage de l'aéronef et peut mener à des excursions de piste.

La présente invention a pour objet de remédier à ces inconvénients.

A cet effet, le procédé de mise en oeuvre des inverseurs de poussée, lors d'un atterrissage ou d'un décollage, d'un aéronef pourvu d'au moins deux turbomoteurs dont les régimes sont commandés individuellement, entre le ralenti et le plein régime, par des manettes des gaz respectivement associées auxdits moteurs, lesdits inverseurs de poussée étant commandés par au moins un organe de commande pour pouvoir passer d'une position inactive repliée à une position active déployée et, inversement, de ladite position active déployée à ladite position inactive repliée, est remarquable en ce que les étapes successives suivantes sont automatiquement effectuées :
a) déploiement desdits inverseurs de poussée préalablement armés lorsque :
   - le régime desdits moteurs est au plus égal à un seuil bas de régime prédéterminé ;
   - la vitesse de l'aéronef est supérieure à un premier seuil de vitesse prédéterminé ; et
   - l'aéronef est considéré en contact avec le sol ;
b) application auxdits moteurs d'un régime prédéterminé au moins égal audit seuil bas de régime tant que la vitesse de l'aéronef est supérieure audit premier seuil de vitesse ;
c) dès que la vitesse dudit aéronef est au plus égale audit premier seuil de vitesse, réduction du régime desdits moteurs de sorte qu'ils atteignent un régime moteur au plus égal audit seuil bas de régime ;
d) puis, repliement desdits inverseurs de poussée.

Ainsi, grâce à l'invention, on obtient une mise en oeuvre automatique des inverseurs de poussée ce qui permet de limiter, voire supprimer, les interventions du ou des pilotes lors de la mise en oeuvre des inverseurs. On diminue alors considérablement le risque d'erreurs humaines (déploiement/repliement intempestif des inverseurs de poussée, poussée des moteurs inadaptée, etc..) lors d'une telle mise en oeuvre.

En outre, le délai entre le toucher des roues et le déploiement des inverseurs de poussée est nul ou quasi-nul, ce qui a pour effet de réduire notablement la distance de freinage de l'aéronef et donc le risque de sortie de piste.

On remarquera que le document FR-A-2872223 décrit un procédé de mise en oeuvre des inverseurs de poussée d'un aéronef, lors d'un atterrissage ou d'un décollage, dans lequel l'étape de déploiement desdits inverseurs de poussée préalablement armés est effectuée lorsque le régime desdits moteurs est au plus égal à un seuil bas de régime prédéterminé.

De préférence, selon l'invention, lesdits inverseurs de poussée sont repliés lorsque la vitesse dudit aéronef est au plus égale à un second seuil de vitesse prédéterminé, ledit second seuil de vitesse étant inférieur audit premier seuil.

En outre, lesdits inverseurs de poussée sont armés si les conditions suivantes sont vérifiées :
- le pilote a sélectionné une poussée inverse correspondant audit régime prédéterminé à appliquer aux moteurs lors de l'étape b) ;
- le pilote a placé l'organe de commande desdits inverseurs de poussée dans une position prédéfinie, dite position automatique ;
- l'aéronef est dans l'une des deux configurations suivantes :
   ■ une configuration d'approche avant un atterrissage ;
   ■ une configuration de décollage.

De façon avantageuse, dans le cas d'une panne d'au moins un desdits inverseurs de poussée, un nouveau régime moteur à appliquer lors de l'étape b) est déterminé pour chacun desdits, moteurs.

Ainsi, la dissymétrie de poussée inverse engendrée par l'inverseur de poussée défaillant est contrôlée et la contrôlabilité de l'aéronef est améliorée.

En variante, dans le cas d'un atterrissage, les inverseurs de poussée sont armés si les conditions suivantes sont vérifiées :
- le pilote a enregistré des paramètres d'atterrissage ;
- le pilote a placé l'organe de commande desdits inverseurs de poussée dans une position prédéfinie, dite position automatique ;
- l'aéronef est dans une configuration d'approche ;
et ledit régime à appliquer aux moteurs lors de l'étape b) est déterminé en fonction desdits paramètres enregistrés et des conditions réelles d'atterrissage de sorte à être optimal.

Ainsi, lorsque le pilote a par exemple programmé la bretelle de sortie de la piste souhaitée, le régime moteur à appliquer aux moteurs lors de l'étape b) est déterminé automatiquement en fonction du toucher des roues sur la piste par rapport à la bretelle de sortie programmée de sorte à ajuster le freinage de l'aéronef.

Avantageusement, avant d'effectuer l'étape b), une vérification du déploiement correct desdits inverseurs de poussée est effectué.

Par ailleurs, par action volontaire du pilote sur au moins un des moyens suivants :
- l'organe de commande desdits inverseurs de poussée ;
- une manette des gaz associée à un desdits moteurs ;
au moins une des étapes a), b), c), d) est interrompue.

Ainsi, le pilote a la possibilité d'arrêter la mise en oeuvre automatique des inverseurs de poussée et de poursuivre manuellement l'inversion de poussée.

Avantageusement, ledit seuil bas de régime prédéterminé est au moins approximativement égal au régime ralenti.

Pour la mise en oeuvre du procédé conforme à l'invention, on prévoit avantageusement un dispositif de commande qui comprend :
- un dispositif logique de déploiement permettant de commander ledit déploiement des inverseurs de poussée ;
- des dispositifs logiques d'application de régime permettant chacun de commander ladite application du régime prédéterminé à un desdits moteurs ;
- des dispositifs logiques de réduction de régime permettant chacun de commander ladite réduction du régime d'un desdits moteurs ; et
- des dispositifs logiques de repliement permettant chacun de commander ledit repliement de l'inverseur de poussée d'un desdits moteurs.

En outre, le dispositif de commande comprend un dispositif logique de retour de position permettant d'effectuer ladite vérification du déploiement correct desdits inverseurs de poussée.

De plus, le dispositif de commande est connecté, par l'intermédiaire d'une liaison, à au moins un des moyens dudit aéronef suivants :
- les commandes de vol ;
- les commandes du train d'atterrissage ;
- les appareils de données de vol ;
- le dispositif de commande des gaz ;
- l'organe de commande desdits inverseurs de poussée ;
de sorte à recevoir des signaux représentatifs d'informations aptes à être exploitées par lesdits dispositifs logiques de déploiement, d'application de régime, de réduction de régime, de repliement et de retour de position.

De préférence, le dispositif de commande est connecté, par l'intermédiaire d'une liaison, à une interface de contrôle reliée à une commande électronique desdits moteurs et à une unité de commande desdits inverseurs de poussée, de sorte à recevoir de ladite interface de contrôle des signaux d'informations aptes à être exploitées par lesdits dispositifs logiques d'application de régime, de réduction de régime, de repliement et de retour de position et à lui transmettre des signaux de commandes respectivement desdits moteurs et desdits inverseurs de poussée.

Par ailleurs, la présente invention concerne un aéronef pourvu d'un dispositif de commande tel que spécifié ci-dessus.
Les figures du dessin annexé feront bien comprendre comment l'invention peut être réalisée. Sur ces figures, des références identiques désignent des éléments semblables.
La figure 1 illustre les étapes principales du procédé de mise en oeuvre automatique des inverseurs de poussée conforme à l'invention lors d'un atterrissage de l'aéronef.
La figure 2 représente schématiquement l'architecture simplifiée du système permettant la mise en oeuvre automatique des inverseurs de poussée selon l'invention.
La figure 3A représente, sous la forme d'un schéma synoptique, un dispositif logique de déploiement intégré au dispositif de commande de l'invention.
Les figures 3B à 3E sont analogues à la figure 3A et représentent respectivement les dispositifs logiques de retour de position, d'application de régime, de réduction de régime et de repliement du dispositif de commande de l'invention.
La figure 4A illustre schématiquement, en coupe transversale, l'organe de commande mis en oeuvre par l'invention, lorsqu'il occupe la position rentrée.
Les figures 4B, 4C et 4D sont des figures analogues à la figure 4A lorsque l'organe de commande occupe respectivement les positions automatique, pleine course et mi-course.

Bien que dans l'exemple de réalisation conforme à l'invention, décrit ci-après, l'aéronef soit un aéronef bi-moteurs équipé d'inverseurs de poussée, on comprendra aisément que le système de l'invention peut être également installé sur un inverseur de poussée équipé d'un dispositif de variation de section de tuyère du moteur.

Le régime de chacun des moteurs est commandé individuellement, entre le ralenti et le plein régime, par des manettes des gaz respectivement associées auxdits moteurs et actionnées par le ou les pilotes.

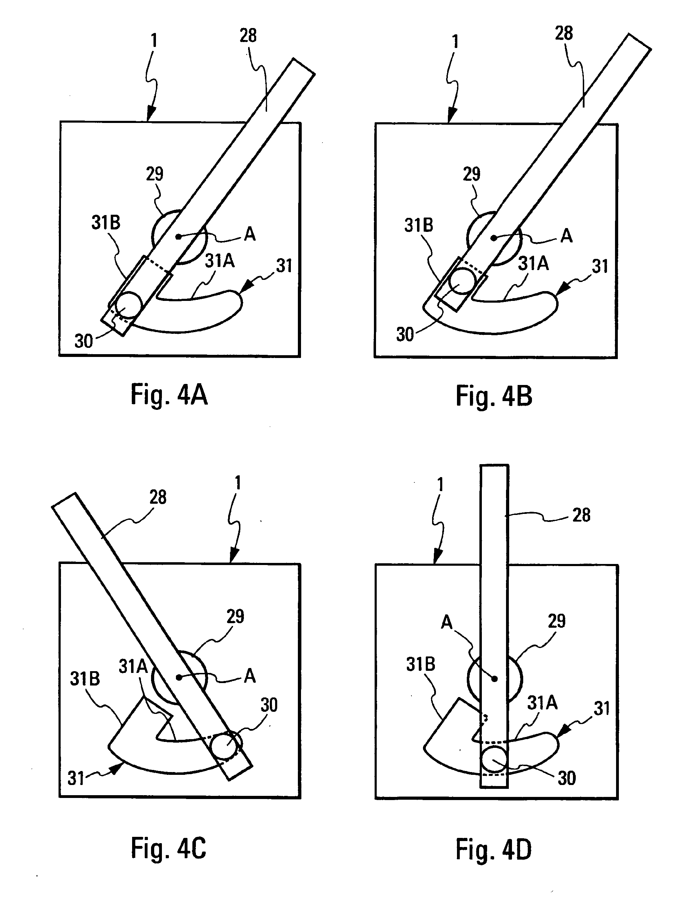

Dans un mode de réalisation préféré, les inverseurs de poussée sont commandés par l'intermédiaire d'un seul organe de commande 1, dont un exemple de réalisation est représenté schématiquement dans différentes positions sur les figures 4A à 4D décrites par la suite.

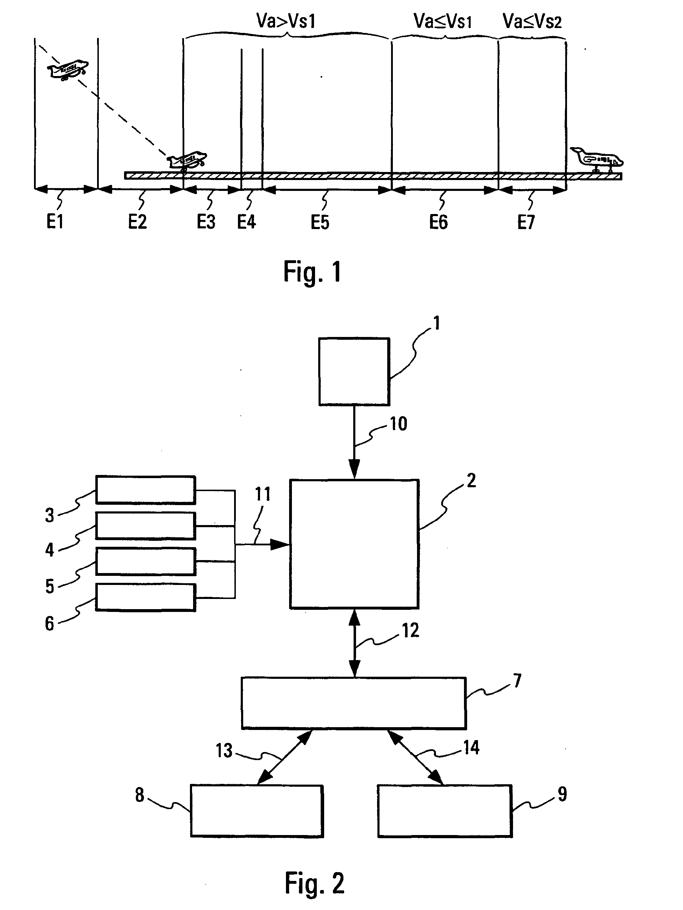

Comme le montre la figure 1, la mise en oeuvre automatique des inverseurs de poussée, désignée mode automatique, conforme à l'invention est la suivante.

On suppose initialement que l'aéronef est dans une phase d'approche d'une piste et est en configuration d'approche. Ses aérofreins et ses freins automatiques sont armés et ses inverseurs de poussée sont en position inactive repliée. L'organe de commande 1 occupe une position prédéfinie (figure 4A), désignée position rentrée. Le mode automatique n'est pas armé.

Tout d'abord, lors de cette phase d'approche, le pilote sélectionne (étape E1), via le système de contrôle de vol connu dans la technique aéronautique sous l'abréviation FMS (pour en anglais Flight Management System), la poussée qu'il souhaite obtenir en sortie des inverseurs de poussée lorsqu'ils seront en position active déployée. Dans l'exemple de réalisation, le pilote peut sélectionner un niveau de poussée inverse parmi trois niveaux (par exemple minimum, intermédiaire, maximum) correspondant chacun à un régime moteur prédéterminé (par exemple ralenti, intermédiaire, maximum autorisé). Pour effectuer la sélection de la poussée inverse, le pilote peut par exemple prendre en compte les conditions météorologiques et les caractéristiques de la piste (par exemple la bretelle de sortie de la piste programmée).

Lorsque la poussée inverse a été sélectionnée (étape E1), le pilote active le mode automatique (étape E2) en amenant l'organe de commande 1 dans une position automatique (figure 4B). Les inverseurs de poussée sont alors armés. Pour désactiver le mode automatique avant le toucher des roues sur le sol, le pilote peut par exemple replacer l'organe de commande 1 dans la position rentrée.

Au toucher des roues sur le sol, lorsque la vitesse de l'aéronef Va est de préférence supérieure à un premier seuil de vitesse prédéterminée Vs1 (par exemple fixé à 70 kts) et que les moteurs sont au ralenti (c'est-à-dire que leur régime moteur est au plus égal à un seuil bas de régime prédéterminé), le déploiement des inverseurs de poussée est commandé (étape E3).

Une vérification du déploiement sans incident des inverseurs de poussée est ensuite effectuée (étape E4). Un signal de confirmation de déploiement des inverseurs de poussée, dans le cas d'un déploiement correct de ces derniers, peut alors parvenir au pilote, par exemple sous la forme d'un signal visuel et/ou sonore. En revanche, dans le cas d'un déploiement anormal d'au moins un des inverseurs de poussée de l'aéronef, un signal de déploiement incorrect peut parvenir au pilote.

Lorsque le déploiement des inverseurs de poussée s'est correctement déroulé, l'application du régime prédéterminé aux moteurs est commandé (étape E5), ledit régime prédéterminé correspondant au niveau de poussée inverse sélectionné par le pilote lors de l'étape E1. Lors de l'étape E5, le régime des moteurs est maintenu sensiblement égal au régime moteur prédéterminé tant que la vitesse de l'aéronef reste par exemple supérieure au premier seuil de vitesse.

Il est à noter que, lorsque le déploiement d'au moins un des inverseurs ne s'est pas correctement déroulé, un nouveau régime moteur à appliquer lors de l'étape E5 est par exemple déterminé pour chaque moteur (y compris le moteur dont l'inverseur de poussée est défaillant), de sorte à contrôler la dissymétrie de poussée inverse engendrée par la défaillance de l'inverseur et améliorer la contrôlabilité de l'aéronef. Les nouveaux régimes moteur associés chacun à un des moteurs peuvent être appliqués, comme dans le cas d'un déploiement correct des inverseurs de poussée, tant que la vitesse de l'aéronef reste supérieure au premier seuil de vitesse.

Dès que la vitesse de l'aéronef est au plus égale audit premier seuil de vitesse, la mise au ralenti des moteurs est commandée (étape E6).

Lorsque les moteurs atteignent le régime ralenti (le régime des moteurs est alors au plus égal au seuil bas de régime) et que la vitesse de l'aéronef est au plus égale à un second seuil de vitesse prédéterminé Vs2 (par exemple le second seuil de vitesse est pris égal à 20 kts), le repliement des inverseurs de poussée de l'aéronef est commandé (étape E7).

La mise en oeuvre automatique des inverseurs de poussée selon l'invention s'achève lorsque les inverseurs de poussée des moteurs sont en position inactive repliée.

Lors d'une interruption de décollage, l'aéronef étant initialement en configuration de décollage, la mise en oeuvre automatique des inverseurs de poussée comporte, de façon semblable à celle lors d'un atterrissage, les étapes E1 à E7 précitées. Il est toutefois à noter que les étapes de sélection d'une poussée inverse E1 et d'activation du mode automatique E2 sont effectuées de préférence avant que la phase de décollage de l'aéronef ne soit commencée et que l'étape E3 de déploiement des inverseurs de poussée peut être déclenchée par la mise brutale des moteurs au ralenti par le pilote.

En outre, lors d'un atterrissage ou d'une interruption de décollage de l'aéronef, après une action volontaire du pilote sur l'organe de commande 1 (par exemple la mise de l'organe de commande dans une position prédéfinie, désignée position mi-course, décrite par la suite en relation avec la figure 4D) ou sur une des manettes des gaz, une des étape E3 à E7 peut être interrompue pour revenir à une mise en oeuvre manuelle des inverseurs de poussée. Le mode automatique est alors désactivé et le pilote peut par exemple commander le maintien d'une poussée inverse en sortie des inverseurs en dessous du premier seuil de vitesse.

En variante de l'exemple de réalisation conforme à l'invention, le pilote peut programmer, lors de l'étape E1, la bretelle de sortie de la piste souhaitée de sorte qu'une sélection du niveau de poussée inverse optimal soit automatiquement effectuée lors de l'étape E3 en fonction des conditions réelles d'atterrissage (par exemple la position du toucher des roues sur la piste par rapport à la bretelle de sortie programmée, les conditions météorologiques, etc..) et que le régime moteur correspondant soit appliqué tant que la vitesse de l'aéronef reste par exemple supérieure au premier seuil de vitesse.

Dans la réalisation préférée de l'invention, le pilote peut également commander manuellement, par l'intermédiaire de l'organe de commande 1, le déploiement et le repliement des inverseurs de poussée ainsi que le régime des moteurs lorsque les inverseurs de poussée sont en position active déployée.

Selon l'invention, cette mise en oeuvre manuelle des inverseurs de poussée, désignée mode manuel, est la suivante.

Tout d'abord, on suppose que l'aéronef est dans une phase d'approche d'une piste et est en configuration d'approche. Ses aérofreins et ses freins automatiques sont armés et ses inverseurs de poussée sont en position inactive repliée (l'organe de commande 1 est dans la position rentrée).

Au toucher des roues sur le sol, les moteurs de l'aéronef étant de préférence au ralenti, le pilote peut actionner le déploiement des inverseurs de poussée en amenant l'organe de commande 1 dans la position mi-course (figure 4D).

Dès que les inverseurs de poussée sont en position active déployée, le pilote peut commander le régime des moteurs, par l'intermédiaire de l'organe de commande 1, entre le ralenti (l'organe de commande 1 est dans la position mi-course) et le régime maximum autorisé lorsque les inverseurs de poussée sont en position active déployée (l'organe de commande 1 occupe une position pleine course, décrite ultérieurement en relation avec la figure 4C) de sorte à contrôler le freinage de l'aéronef.

Lorsque la vitesse de l'aéronef est au plus égale au premier seuil de vitesse, le pilote peut commander le repliement des inverseurs de poussée. A cette fin, il amène tout d'abord d'organe de commande 1 dans la position mi-course (figure 4D) de sorte que les moteurs soient au ralenti. Il dispose ensuite l'organe de commande 1 dans la position rentrée (figure 4A) pour que les inverseurs de poussée passent de la position active déployée à la position inactive repliée.

Il est à noter que, dans le mode manuel, la mise en oeuvre des inverseurs de poussée lors d'une interruption de décollage est semblable à celle précitée lors d'un atterrissage.

Comme le montre la figure 2, l'organe de commande 1 est apte à engendrer des signaux électriques qui sont transmis à un dispositif de commande 2 mettant en oeuvre le procédé de l'invention, par l'intermédiaire de la liaison 10. Le dispositif de commande 2 est de préférence intégré au système de contrôle de vol FMS de l'aéronef.

Le dispositif de commande 2 peut également, mais non exclusivement, recevoir des signaux électriques transmis par les commandes de vol 3 de l'aéronef, les commandes du train d'atterrissage 4, les appareils de données de vol 5 et le dispositif de commande des gaz 6, par l'intermédiaire de la liaison 11 comme illustré sur la figure 2. Il peut en outre émettre et recevoir des signaux électriques d'une interface de commande 7, par l'intermédiaire de la liaison 12.

L'interface de commande 7 peut transmettre et recevoir des signaux électriques d'une commande électronique des moteurs 8, par l'intermédiaire de la liaison 13, et d'une unité de commande des inverseurs de poussée 9, par l'intermédiaire de la liaison 14.

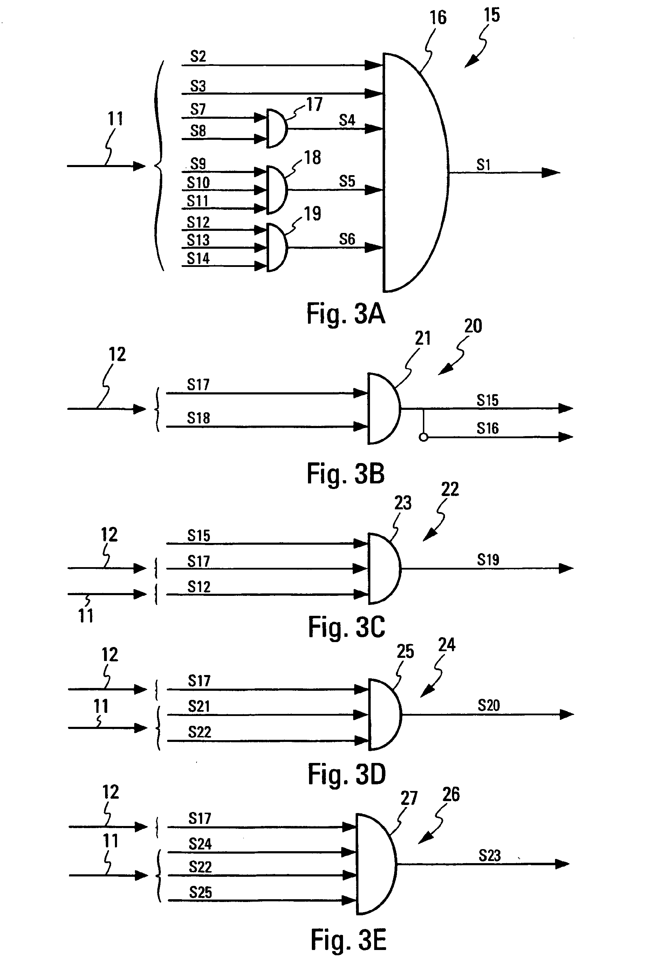

Dans l'exemple de réalisation, le dispositif de commande 2 comporte notamment les dispositifs logiques suivants, représentés par les figures respectives 3A à 3E sous forme de schémas synoptiques :
- un dispositif logique de déploiement 15 (figure 3A) qui permet de commander le déploiement (étape E3) des inverseurs de poussée ;
- un dispositif logique de retour de position 20 (figure 3B) qui permet de vérifier (étape E4) le déploiement des inverseurs de poussée ;
- un dispositif logique d'application de régime 22 (figure 3C) associé à chaque moteur qui permet de commander (étape E5) le régime dudit moteur en lui appliquant le régime moteur prédéterminé correspondant à la poussée inverse sélectionnée lors de l'étape E1 ;
- un dispositif logique de réduction de régime 24 (figure 3D) associé à chaque moteur qui permet de commander la mise au ralenti dudit moteur (étape E6) ; et
- un dispositif logique de repliement 26 (figure 3E) associé à chaque moteur qui permet de commander le repliement de l'inverseur de poussée dudit moteur (étape E7).

Comme le montre la figure 3A, le dispositif logique de déploiement 15 comporte une première porte logique ET 16 à cinq entrées et une sortie. La porte logique ET 16 peut délivrer un signal S1 sur sa sortie lorsqu'un signal est reçu par chacune de ses cinq entrées. Dans ce cas, le signal S1 est un signal de commande de déploiement des inverseurs de poussée qui est transmis à l'interface de commande 7 par l'intermédiaire de la liaison 12.

A titre d'exemple, la première porte logique ET 16 peut recevoir :
- un premier signal S2, représentatif de la position ralenti des manettes des gaz des moteurs de l'aéronef, sur sa première entrée. Lorsqu'au moins une des manettes des gaz n'occupe pas la position ralenti, aucun signal ne parvient à cette première entrée ;
- un second signal S3, représentatif de la vitesse de l'aéronef lorsqu'elle est supérieure au premier seuil de vitesse, sur sa seconde entrée. Aucun signal ne parvient à la seconde entrée quand la vitesse est au plus égale au premier seuil de vitesse ;
- un troisième signal S4, représentatif de l'état armé des aérofreins et des freins automatiques de l'aéronef, sur sa troisième entrée qui est reliée à la sortie d'une seconde porte logique ET 17 à deux entrées. Le signal S4 est délivré en sortie de la seconde porte logique ET 17 lorsqu'un signal S7, représentatif de l'état armé des aérofreins, et un signal S8, représentatif de l'état armé des freins automatiques, sont reçus respectivement par la première et la seconde entrée de la porte logique ET 17. En l'absence d'au moins un des signaux S7 ou S8, aucun signal n'est délivré ;
- un quatrième signal S5, représentatif du contact de l'aéronef avec le sol, sur sa quatrième entrée qui est reliée à la sortie d'une troisième porte logique ET 18 à trois entrées. Le signal S5 est délivré en sortie de la troisième porte logique ET 18 lorsqu'un signal S9, représentatif de l'altitude de l'aéronef quand elle est au plus égale à un seuil d'altitude prédéterminé (par exemple 5 pieds), un signal S 10, représentatif de la vitesse des roues du train principal quand elle est supérieure à un troisième seuil de vitesse prédéterminé (par exemple 72 kts), et un signal S11, représentatif de l'état compressé du train d'atterrissage principal, sont reçus respectivement par ses trois entrées ;
- un cinquième signal S6, représentatif de l'état armé des inverseurs de poussée de l'aéronef, sur sa cinquième entrée qui est reliée à la sortie d'une quatrième porte logique ET 19 à trois entrées. Le signal S6 est délivré en sortie de la quatrième porte logique ET 19 lorsqu'un signal S12, représentatif de la position automatique occupée par l'organe de commande 1, un signal S13, représentatif de la configuration d'approche de l'aéronef, et un signal S14, représentatif de la sélection par le pilote d'un niveau de poussée inverse, sont reçus respectivement par ses trois entrées.

Comme le montre la figure 3B, le dispositif logique de retour de position 20 comporte une porte logique ET 21 à deux entrées qui délivre en sortie un signal S15 de confirmation de déploiement des inverseurs de poussée lorsque deux signaux S17 et S 18, représentatifs chacun de l'état déployé de l'inverseur de poussée d'un moteur, parviennent respectivement à ses deux entrées. En revanche, lorsqu'au moins un inverseur de poussée ne s'est pas correctement déployé, un signal S16 de déploiement anormal des inverseurs de poussée est transmis en sortie de la porte logique ET 21.

En outre, tel qu'illustré sur la figure 3C, chaque dispositif logique d'application de régime 22 comporte une porte logique ET 23 à trois entrées. Elle peut délivrer sur sa sortie un signal S19 lorsque les signaux S15, S17 ou S18 (selon le moteur associé au dispositif logique 22) et le signal S12 sont reçus par ses trois entrées. Dans ce cas, le signal S19 est un signal de commande du régime moteur à appliquer au moteur associé au dispositif logique 22 pour obtenir, en sortie de l'inverseur de poussée correspondant, la poussée inverse présélectionnée (étape E1) par le pilote. Le signal S19 est transmis à l'interface de commande 7, par l'intermédiaire de la liaison 12.

De plus, comme illustré sur la figure 3D, chaque dispositif logique de réduction de régime 24 comporte une porte logique ET 25 à trois entrées. Elle peut délivrer en sortie un signal S20 lorsque le signal S17 ou S 18 (selon le moteur associé au dispositif logique 24), un signal S21, représentatif de la vitesse de l'aéronef lorsqu'elle est au plus égale au premier seuil de vitesse, et un signal S22, représentatif de la vitesse de l'aéronef lorsqu'elle est supérieure à un quatrième seuil de vitesse prédéterminé (par exemple 3 kts), sont reçus par ses trois entrées. Dans ce cas, le signal S20 est un signal de commande pour réduire le régime du moteur associé au dispositif logique 24 de sorte que ce régime atteigne le ralenti. Le signal S20 est transmis à l'interface de commande 7, par l'intermédiaire de la liaison 12.

Par ailleurs, comme le montre la figure 3E, chaque dispositif logique de repliement 26 comporte une porte logique ET 27 à quatre entrées. Elle peut délivrer à sa sortie un signal S23 lorsque :
- le signal S17 ou S18 (selon le moteur associé au dispositif logique 26) ;
- un signal S24, représentatif de la vitesse de l'aéronef lorsqu'elle est au plus égale au second seuil de vitesse ;
- le signal S22 ;
- un signal S25 ou S26 (selon le moteur associé au dispositif logique 26), représentatifs chacun du régime d'un moteur lorsqu'il est au ralenti ;
sont reçus respectivement par ses quatre entrées. Dans ce cas, le signal S23 est un signal de commande de repliement de l'inverseur de poussée du moteur associé au dispositif logique 26. Le signal S23 est transmis à l'interface de commande 7, par l'intermédiaire de la liaison 12, qui relaie ensuite cette commande de repliement vers l'unité de commande 9 des inverseurs de poussée, par l'intermédiaire de la liaison 14.

Comme le montrent les figures 4A à 4D, l'organe de commande 1 comporte de préférence un levier 28 qui peut coulisser dans un guide mobile 29 apte à pivoter autour de l'axe orthogonal au plan de coupe passant par A. Le levier 28 comporte, à son extrémité inférieure, un tenon 30 qui peut se déplacer dans une ouverture de guidage 31 pratiquée dans la structure de l'organe de commande 1. L'ouverture de guidage 31 comporte une portion circulaire 31 A de centre A et, à son extrémité gauche, une encoche radiale 31B dans laquelle peut venir se loger le tenon 30. Ainsi, le levier 28 peut avoir un mouvement de rotation de centre A, le tenon 30 se déplace alors dans la portion circulaire 31 A de l'ouverture de guidage 31, et un mouvement de translation, le tenon 30 vient se loger dans l'encoche radiale 31 B.

Dans le mode de réalisation préféré, l'organe de commande 1 peut occuper les positions suivantes :
- la position rentrée (figure 4A), dans laquelle le levier 28 est basculé totalement vers la droite, le tenon 30 est en butée contre l'extrémité gauche de la portion circulaire 31 A de l'ouverture de guidage 31. Dans la position rentrée, les inverseurs de poussée sont en position inactive repliée ;
- la position automatique (figure 4B) dans laquelle le levier 28 a été tiré légèrement vers le haut par le pilote depuis la position rentrée. Le tenon 30 vient alors se loger dans l'encoche radiale 31B. Le mode automatique précité est activé ;
- la position pleine course (figure 4C) dans laquelle le levier 28 est basculé totalement vers la gauche. Le tenon 30 est alors en butée contre l'extrémité droite de la portion circulaire 31 A de l'ouverture de guidage 31. Dans la position pleine course, les inverseurs de poussée sont en position active déployée et le régime des moteurs atteint le maximum autorisé lorsque les inverseurs sont déployés ;
- la position mi-course dans laquelle le levier 28 occupe une position intermédiaire entre la position rentrée et la position pleine course. Le tenon 30 est alors par exemple à équidistance des deux extrémités de la portion circulaire 31 A. Dans la position mi-course, les moteurs sont au ralenti et les inverseurs de poussée sont en position active déployée.

## Revendications

1. Procédé de mise en oeuvre des inverseurs de poussée, lors d'un atterrissage ou d'un décollage, d'un aéronef pourvu d'au moins deux turbomoteurs dont les régimes sont commandés individuellement, entre le ralenti et le plein régime, par des manettes de gaz respectivement associées auxdits moteurs, lesdits inverseurs de poussée étant commandés par au moins un organe de commande (1) pour pouvoir passer d'une position inactive repliée à une position active déployée et, inversement, de ladite position active déployée à ladite position inactive repliée,
**caractérisé en ce que** les étapes successives suivantes sont automatiquement effectuées :
a) déploiement (E3) desdits inverseurs de poussée préalablement armés lorsque :
- le régime desdits moteurs est au plus égal à un seuil bas de régime prédéterminé ;
- la vitesse de l'aéronef est supérieure à un premier seuil de vitesse prédéterminé ; et
- ledit aéronef est considéré en contact avec le sol ;
b) application (E5) auxdits moteurs d'un régime prédéterminé au moins égal audit seuil bas de régime tant que la vitesse de l'aéronef est supérieure audit premier seuil de vitesse ;
c) dès que la vitesse dudit aéronef est au plus égale audit premier seuil de vitesse, réduction (E6) du régime desdits moteurs de sorte qu'ils atteignent un régime moteur au plus égal audit seuil bas de régime ;
d) puis, repliement (E7) desdits inverseurs de poussée.

2. Procédé selon la revendication 1,
**caractérisé en ce que** lesdits inverseurs de poussée sont repliés lorsque la vitesse dudit aéronef est au plus égale à un second seuil de vitesse prédéterminé, ledit second seuil de vitesse étant inférieur audit premier seuil.

3. Procédé selon l'une des revendications 1 ou 2,
**caractérisé en ce que** les inverseurs de poussée sont armés si les conditions suivantes sont vérifiées :
- le pilote a sélectionné (E1) une poussée inverse correspondant audit régime prédéterminé à appliquer aux moteurs lors de l'étape b) ;
- le pilote a placé (E2) l'organe de commande (1) desdits inverseurs de poussée dans une position prédéfinie, dite position automatique ;
- l'aéronef est dans l'une des deux configurations suivantes :
• une configuration d'approche avant un atterrissage ;
• une configuration de décollage.

4. Procédé selon l'une quelconque des revendications 1 à 3, **caractérisé en ce que**, dans le cas d'une panne d'au moins un desdits inverseurs de poussée, un nouveau régime moteur à appliquer lors de l'étape b) est déterminé pour chacun desdits moteurs.

5. Procédé selon l'une des revendications 1 ou 2,
**caractérisé en ce que**, dans le cas d'un atterrissage, les inverseurs de poussée sont armés si les conditions suivantes sont vérifiées :
- le pilote a enregistré des paramètres d'atterrissage ;
- le pilote a placé (E2) l'organe de commande (1) desdits inverseurs de poussée dans une position prédéfinie, dite position automatique ;
- l'aéronef est dans une configuration d'approche ;
et **en ce que** ledit régime à appliquer aux moteurs lors de l'étape b) est déterminé en fonction desdits paramètres enregistrés et des conditions réelles d'atterrissage de sorte à être optimal.

6. Dispositif de commande (2) pour la mise en oeuvre du procédé spécifié sous l'une quelconque des revendications 1 à 5,
**caractérisé en ce qu'**il comprend :
- un dispositif logique de déploiement (15) permettant de commander ledit déploiement (E1) des inverseurs de poussée ;
- des dispositifs logiques d'application de régime (22) permettant chacun de commander ladite application (E5) du régime prédéterminé à un desdits moteurs ;
- des dispositifs logiques de réduction de régime (24) permettant chacun de commander ladite réduction (E6) du régime d'un desdits moteurs ; et
- des dispositifs logiques de repliement (26) permettant chacun de commander ledit repliement (E7) de l'inverseur de poussée d'un desdits moteurs.

7. Dispositif selon la revendication 6,
**caractérisé en ce qu'**il comprend en outre un dispositif logique de retour de position (20) permettant d'effectuer ladite vérification (E4) du déploiement correct desdits inverseurs de poussée.

8. Dispositif selon la revendication 7,
**caractérisé en ce qu'**il est connecté, par l'intermédiaire d'une liaison (10, 11), à au moins un des moyens dudit aéronef suivants :
- les commandes de vol (3) ;
- les commandes du train d'atterrissage (4) ;
- les appareils de données de vol (5) ;
- le dispositif de commande des gaz (6) ;
- l'organe de commande (1) desdits inverseurs de poussée ;
de sorte à recevoir des signaux représentatifs d'informations aptes à être exploitées par lesdits dispositifs logiques de déploiement (15), d'application de régime (22), de réduction de régime (24), de repliement (26) et de retour de position (20).

9. Dispositif selon l'une des revendications 7 ou 8,
**caractérisé en ce qu'**il est connecté en outre, par l'intermédiaire d'une liaison (12), à une interface de contrôle (7) reliée à une commande électronique (8) desdits moteurs et à une unité de commande (9) desdits inverseurs de poussée, de sorte à recevoir de ladite interface de contrôle (7) des signaux d'informations aptes à être exploitées par lesdits dispositifs logiques d'application de régime (22), de réduction de régime (24), de repliement (26) et de retour de position (20) et à lui transmettre des signaux de commandes respectivement desdits moteurs et desdits inverseurs de poussée.

10. Aéronef,
**caractérisé en ce qu'**il comprend ledit dispositif de commande (2) selon l'une quelconque des revendications 6 à 9.

## Patentansprüche

1. Verfahren zum Einsetzen von Schubumkehrvorrichtungen während einer Landung oder eines Starts eines Flugzeugs, das mit mindestens zwei Turbinentriebwerken ausgestattet ist, deren Drehzahlen zwischen Leerlauf und Volllast einzeln durch den Triebwerken jeweils zugeordnete Gashebel gesteuert werden, wobei die Schubumkehrvorrichtungen durch mindestens eine Steuereinheit (1) gesteuert werden, um von einer inaktiven eingeklappten Stellung in eine aktive ausgeklappte Stellung übergehen zu können und umgekehrt von der aktiven ausgeklappten Stellung in die inaktive eingeklappte Stellung,
**dadurch gekennzeichnet, dass** die nachstehenden aufeinanderfolgenden Ablaufschritte automatisch ausgeführt werden:
a) Ausklappen (E3) der vorher entsicherten Schubumkehrvorrichtungen, wenn:
- die Drehzahl der Triebwerke höchstens einem unteren vorgegebenen Drehzahlschwellenwert entspricht;
- die Geschwindigkeit des Flugzeugs über einem ersten vorgegebenen Geschwindigkeitsschwellenwert liegt; und
- das Flugzeug als in Bodenkontakt befindlich betrachtet wird;
b) Anwendung (E5) einer vorgegebenen Drehzahl auf die Triebwerke, die mindestens dem unteren Drehzahlschwellenwert entspricht, solange die Geschwindigkeit des Flugzeugs über dem ersten Geschwindigkeitsschwellenwert liegt;
c) sobald die Geschwindigkeit des Flugzeugs höchstens dem ersten Geschwindigkeitsschwellenwert entspricht, Reduzierung (E6) der Drehzahl der Triebwerke, sodass sie eine Triebwerksdrehzahl erreichen, die höchstens dem unteren Drehzahlschwellenwert entspricht;
d) anschließend Einklappen (E7) der Schubumkehrvorrichtungen.

2. Verfahren nach Anspruch 1,
**dadurch gekennzeichnet, dass** die Schubumkehrvorrichtungen eingeklappt werden, wenn die Geschwindigkeit des Flugzeugs höchstens einem zweiten vorgegebenen Geschwindigkeitsschwellenwert entspricht, wobei der zweite Geschwindigkeitsschwellenwert niedriger als der erste Schwellenwert ist.

3. Verfahren nach einem der Ansprüche 1 oder 2,
**dadurch gekennzeichnet, dass** die Schubumkehrvorrichtungen entsichert werden, wenn die folgenden Bedingungen erfüllt sind:
- der Pilot hat eine der vorgegebenen Drehzahl entsprechende Schubumkehr gewählt (E1), die auf die Triebwerke während des Ablaufschritts b) anzuwenden ist;
- der Pilot hat die Steuereinheit (1) der Schubumkehrvorrichtungen in eine vordefinierte Stellung gebracht (E2), die als Automatik-Stellung bezeichnet wird;
- das Flugzeug befindet sich in einer der beiden folgenden Konfigurationen:
• einer Anflugkonfiguration vor einer Landung;
• einer Startkonfiguration.

4. Verfahren nach einem der Ansprüche 1 bis 3,
**dadurch gekennzeichnet, dass** für den Fall eines Ausfalls von mindestens einer der Schubumkehrvorrichtungen, eine neue Motordrehzahl für jedes der Triebwerke bestimmt wird, die während des Ablaufschritts b) angewendet wird.

5. Verfahren nach einem der Ansprüche 1 oder 2,
**dadurch gekennzeichnet, dass** im Fall einer Landung die Schubumkehrvorrichtungen entsichert werden, wenn die folgenden Bedingungen erfüllt sind:
- der Pilot hat Landungsparameter erfasst;
- der Pilot hat die Steuereinheit (1) der Schubumkehrvorrichtungen in eine vordefinierte Stellung gebracht (E2), die als Automatik-Stellung bezeichnet wird;
- das Flugzeug befindet sich in einer Anflugkonfiguration;
und dadurch, dass die während des Ablaufschritts b) auf die Triebwerke anzuwendende Drehzahl in Abhängigkeit von den erfassten Parametern und den tatsächlichen Landungsbedingungen bestimmt wird, sodass sie optimal ist.

6. Steuervorrichtung (2) für das Umsetzen des Verfahrens, das in einem der Ansprüche 1 bis 5 angegeben ist,
**dadurch gekennzeichnet, dass** sie aufweist:
- eine Logikvorrichtung zum Ausklappen (15), die ein Steuern des Ausklappens (E1) der Schubumkehrvorrichtungen gestattet;
- Logikvorrichtungen für Drehzahlanwendungen (22), die jeweils ein Steuern der Anwendung (E5) der vorgegebenen Drehzahl auf eines der Triebwerke gestatten;
- Logikvorrichtungen zur Drehzahlreduzierung (24), die jeweils ein Steuern der Reduzierung (E6) der Drehzahl der Triebwerke gestatten; und
- Logikvorrichtungen zum Einklappen (26), die jeweils ein Steuern des Einklappens (E7) der Schubumkehrvorrichtung der Triebwerke gestatten.

7. Vorrichtung nach Anspruch 6,
**dadurch gekennzeichnet, dass** sie des Weiteren eine Logikvorrichtung zur Positionsrückkopplung (20) aufweist, die die Überprüfung (E4) des korrekten Ausklappens der Schubumkehrvorrichtungen gestattet.

8. Vorrichtung nach Anspruch 7,
**dadurch gekennzeichnet, dass** sie mittels einer Verbindung (10, 11) mit mindestens einem der folgenden Mittel des Flugzeugs verbunden ist:
- Flugsteuerelemente (3);
- Steuerelemente für das Fahrgestell (4);
- Geräte für Flugdaten (5);
- Gas-Steuervorrichtungen (6);
- Steuereinheit (1) der Schubumkehrvorrichtungen;
sodass Informationen darstellende Signale empfangen werden, die geeignet sind, von den Logikvorrichtungen zum Ausklappen (15), für Drehzahlanwendungen (22), zur Drehzahlreduzierung (24), zum Einklappen (26) und zur Positionsrückkopplung (20) genutzt zu werden.

9. Vorrichtung nach einem der Ansprüche 7 oder 8,
**dadurch gekennzeichnet, dass** sie des Weiteren mittels einer Verbindung (12) mit einer Kontrollschnittstelle (7) verbunden ist, die mit einer elektronischen Steuerung (8) der Triebwerke und einer Steuereinheit (9) der Schubumkehrvorrichtungen verbunden ist, sodass von der Kontrollschnittstelle (7) Informationssignale empfangen werden, die geeignet sind, von den Logikvorrichtungen für Drehzahlanwendungen (22), zur Drehzahlreduzierung (24), zum Einklappen (26) und zur Positionsrückkopplung (20) genutzt zu werden, und jeweils Steuersignale von den Triebwerken und den Schubumkehrvorrichtungen zu ihr zu übertragen.

10. Flugzeug,
**dadurch gekennzeichnet, dass** es die Steuervorrichtung (2) nach einem der Ansprüche 6 bis 9 aufweist.

## Claims

1. A method for implementing the thrust reversers, upon a landing or a takeoff, of an aircraft provided with at least two turboengines, the speeds of which are individually controlled, between the idling speed and the full speed, by throttle levers respectively associated with said engines, said thrust reversers being controlled by at least one control member (1) for being able to switch from an inactive folded position to an active deployed position and, reversely, from said active deployed position to said inactive folded position,
**characterized in that** the successive steps are automatically performed:
a) a deployment (E3) of said beforehand armed thrust reversers when:
- the speed of said engines is at the most equal to a low predetermined speed threshold;
- the speed of the aircraft is higher than a first predetermined speed threshold; and
- said aircraft is considered being in contact with the ground;
b) an application (E5) to said engines of a predetermined speed being at least equal to said low speed threshold as long as the speed of the aircraft is higher than said first speed threshold;
c) as soon as the speed of said aircraft is at the most equal to said first speed threshold, a reduction (E6) of the speed of said engines so that they reach a speed at the most equal to said low speed threshold;
d) then, an folding (E7) of said thrust reversers.

2. A method according to claim 1,
**characterized in that** said thrust reversers are folded when the speed of said aircraft is at the most equal to a second predetermined speed threshold, said second speed threshold being lower than said first threshold.

3. A method according to any of claims 1 or 2,
**characterized in that** the thrust reversers are armed if the following conditions are met:
- the pilot has selected (E1) a reverse thrust corresponding to said predetermined speed to be applied to the engines at step b) ;
- the pilot has put (E2) the control member (1) of said thrust reversers in a predefined position, referred to as the automatic position;
- the aircraft is in one of the two following configurations:
• an approach configuration before a landing;
• a takeoff configuration.

4. A method according to any of claims 1 to 3, **characterized in that**, should at least one of said thrust reversers break down, a new speed to be applied at step b) is determined for each one of said engines.

5. A method according to any of claims 1 or 2,
**characterized in that**, in the case of a landing, the thrust reversers are armed if the following conditions are met:
- the pilot has recorded the landing parameters;
- the pilot has put (E2) the control member (1) of said thrust reversers in a predefined position, referred to as the automatic position;
- the aircraft is in an approach configuration;
and **in that** said speed to be applied to the engines at step b) is determined as a function of said recorded parameters and of the actual landing conditions so as to be optimal.

6. A control device (2) for implementing the method as specified in any of claims 1 to 5,
**characterized in that** it comprises:
- a deployment logic device (15) for controlling said deployment (E1) of the thrust reversers;
- speed application logic devices (22) each allowing said application (E5) of the predetermined speed to one of said engines to be controlled;
- speed reduction logic devices (24) each allowing said reduction (E6) of the speed of one of said engines to be controlled; and
- folding logic devices (26) each allowing said folding (E7) of the thrust reverser of one of said engines to be controlled.

7. A device according to claim 6,
**characterized in that** it further comprises a position return logic device (20) allowing said check (E4) of the correct deployment of said thrust reversers to be performed.

8. A device according to claim 7,
**characterized in that** it is connected, via a link (10, 11), to at least one of the following means of said aircraft:
- the flight controls (3);
- the controls of the landing gear (4);
- the flight data devices (5);
- the throttle lever device (6);
- the control member (1) of said thrust reversers;
so as to receive signals representative of information being able to be used by said logic devices for deployment (15), speed application (22), speed reduction (24), folding (26) and position return (20).

9. A device according to any of claims 7 or 8,
**characterized in that** it is further connected, via a link (12), to a control interface (7) connected to an electronic control (8) of said engines and to a control unit (9) of said thrust reversers, so as to receive from said control interface (7) information signals being able to be used by said logic devices for speed application (22), speed reduction (24), folding (26) and position return (20) and to transmit to it control signals respectively from said engines and said thrust reversers.

10. An aircraft,
**characterized in that** it comprises said control device (2) according to any of claims 6 to 9.
